# EUROPEAN PATENT SPECIFICATION

(11) **EP 3 684 716 B1**
(45) Date of publication and mention of the grant of the patent: **22.05.2024**
(21) Application number: 18768911.2
(22) Date of filing: 19.09.2018
(51) Int. Cl.: B65G 67/24, B60P 1/56

(54) **UNLOADING SYSTEM COMPRISING A HOPPER AND A TRAILER**
ENTLADESYSTEM MIT EINEM TRICHTER UND EINEM ANHÄNGER
SYSTÈME DE DÉCHARGEMENT COMPRENANT UNE TRÉMIE ET UNE REMORQUE

(30) Priority: 19.09.2017 EP 17191909
(43) Date of publication of application: 29.07.2020
(73) Proprietor: Move Intermodal NV, 3600 Genk (BE)
(72) Inventor: VAN MAANEN, Hans, 3600 Genk (BE); WINTERS, Cornelis Jan, 3600 Genk (BE); PEETERS, Carlo, 3600 Genk (BE)
(74) Representative: Arnold & Siedsma
(86) International application number: PCT/EP2018/075284
(87) International publication number: WO 2019/057741

(56) References cited:
- CA-A- 948 039
- US-A- 4 875 811
- US-A- 5 653 572

## Description

### FIELD OF THE INVENTION

The current invention describes an unloading system for bulk cargo comprising a hopper and trailer. The trailer is adapted to hold the hopper both in an active and passive configuration. Hence, all of the required equipment (including winding motor, air blower, rotary valve, ...) is present on the trailer chassis and/or tractor unit when the container is transported. As a result, the current invention allows to unload tons of bulk cargo from a cargo container within two hours, thereby leaving behind a minimum amount of bulk cargo (less than 25 kg) and not being strictly dependent of discharging equipment like a hopper and/or air blower on the cargo unloading site.

### BACKGROUND TO THE INVENTION

Containers and boxes are commonly used to transports goods and products over the road, by rail and by ship, and the many advantages of such containers have made it very desirable to adapt them for use with as many types of cargo as possible.

Commonly, when a cargo is transported in bulk in a large, intermodal container, the cargo is discharged from the container by tilting the container so that the cargo slides out the back of the container under the force of gravity. While this cargo discharging method has received significant commercial acceptance, it has a disadvantage in that it requires an expensive apparatus to tilt the container.

Considerable attention has been given over the last several years for transporting bulk cargo into a so-called "Liner" (a bag, commonly a plastic bag, that fills the entire space of the container) and is discharged by tilting the container resulting in the bulk cargo flowing out of the container through the opened discharging hatch, for example as mentioned in US3951284 or US5975642. Furthermore, inflatable liners have been developed which cause to bulk cargo to tilt (e.g. US594394 and WO2005090121).

Another method for discharging bulk cargo from a cargo container, is by placing a pleated liner, i.e. a flexible sheet also known as a "Carpet" on the container floor, or eventually within the liner bag, when the container is empty, and then the cargo is loaded into the container, over the carpet (21). To discharge the cargo from the container, the carpet of the liner is pulled out from the cargo container, pulling the product out from the container with the liner without risk of contamination (e.g. important for food, chemicals,...) and without the dangers commonly associated with tilting or other accidents. WO1993002004 for instance discloses a cargo container with a convoluted floor liner on the floor of the container. In particular, the container comprises a container body, a liner bag, a floor liner, and a rear bulkhead. The floor liner is positioned on the container floor in the liner bag in a sequence of overlapping pleats or with a series of spaced rolls that allow the length of the liner to expand. The bulkhead is held inside the container body, immediately forward of a back wall thereof, to hold the cargo in the cargo space. To unload cargo from the container, an opening is formed in the bottom of the bulkhead, and the carpet (21) of the liner is pulled out from the cargo container. As the carpet (21) is pulled, cargo is pulled out over the liner, and at the same time, the pleats or rolls of the liner unfold and unroll, expanding the length of the liner. A mechanical pulling apparatus (i.e. a hopper) is directly mounted on the cargo container to pull the carpet (21) out therefrom.

In great contrast with the current invention, the hopper of WO1993002004 always needs to be on site when unloading cargo, as it does not provide a hopper with deployable side panels and legs, nor does the hopper comprises an active or passive configuration, and hence, does not enable easy transport towards different cargo unloading sites. Furthermore, the trailer mentioned in WO1993002004 is not adapted to hold and transport the hopper as described in the current description, nor to comprise the rotary valve. Hence, in case of WO1993002004, it may often occur that neither a hopper nor a rotary valve is present on a cargo unloading site, resulting in unnecessary and unwanted time loss for the hopper to arrive, and in some cases even the cargo to run to waste.

Document US 5 653 572 A discloses an unloading system for unloading a bulk container with a liner bag and carpet, comprising a hopper and a trailer. The hopper comprises a winding roll, a tundish and a funnel. The tundish comprises side panels and the funnel comprises connection means for a detachable rotary valve. The hopper is either positioned in a passive configuration or in an active configuration.

To solve the problem mentioned above, the current invention provides an unloading system according to claim 1 comprising a trailer and a hopper, wherein the trailer is adapted to hold the hopper both in an active and passive configuration. The trailer is capable of holding the hopper in a passive configuration during transport, and having the necessary means to hold and participate with the hopper in active state. As further detailed hereinafter, thereto the hopper has been particularly designed and the trailer will comprise features necessary for accommodating said hopper both in its passive and active configuration. In one embodiment the current invention describes an unloading system comprising a hopper with deployable side panels and legs. In another embodiment the current invention describes an unloading system comprising a hopper with deployable legs. Hence, all of the required equipment (including winding motor, air blower, rotary valve, ...) is present on the trailer chassis and/or tractor unit when the container is transported. As a result, the current invention allows to unload tons of bulk cargo from a cargo container within two hours, thereby leaving behind a minimum amount of bulk cargo (less than 25 kg) and not being strictly dependent of discharging equipment like a hopper and/or air blower on the cargo unloading site.

### SUMMARY OF THE INVENTION

The invention is defined by the independent claims. Embodiments of the invention become apparent from the dependent claims. The unloading system of the present invention comprises a hopper for unloading a bulk container with a pleated liner, more precisely a hopper comprising a tundish and a funnel. The tundish comprises side panels and a winding roll to pull the pleated liner during unloading and the funnel comprises connection means for a detachable rotary valve. The winding roll could be fixed within the tundish, but could equally be removable or present on a separate support that can be mounted onto or within the tundish. In a further embodiment, the side panels of the tundish comprise recesses to receive said winding roll. In each of the foregoing embodiment the winding roll is preferably positioned below the floor level of the bulk container.

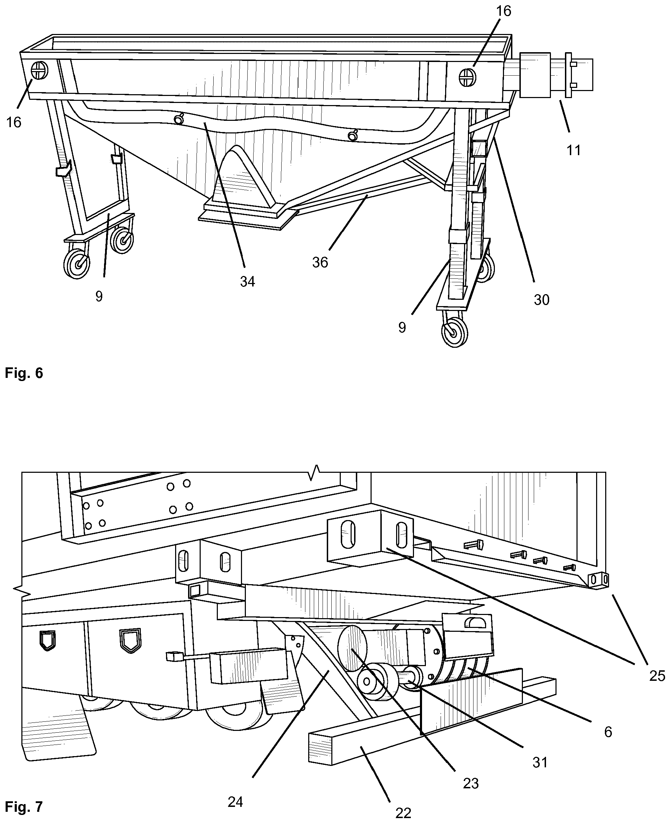

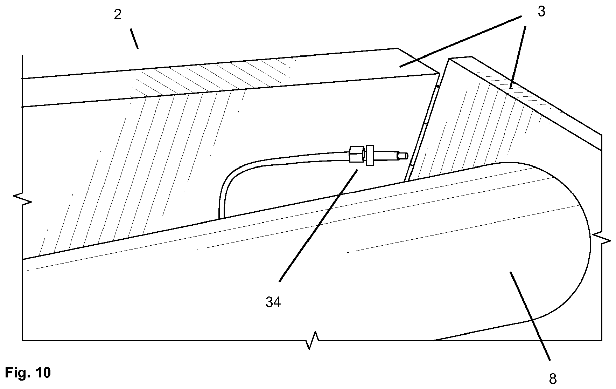

In one embodiment at the side facing the container, the tundish comprises means to create an air current below pleated liner and besides the winding roll. Said means to create an air flow (33) could for example consist of pressurized air lines (34) with openings at the given location. In a particular embodiment with openings directed towards the roll, more in particular with openings directed to the peripheral ends of the winding roll. Reference is made to Figure 6 and Figure 10, where in Figure 6 you can see the pressurized air lines (34) mounted to the side of the hopper and entering the hopper at the lower end of the tundish, in Figure 10 it is shown how said pressurized air lines (34) at the inside of the hopper are being directed with their openings to the side and peripheral ends of the winding roll. That these air flow is effectively generated at the side of the hopper / tundish facing the container is also evident from Figure 6, showing the pins (16) that can fit with the corner locks (25) of the container and according assist in proper positioning and alignment of the hopper to the back of the container. This is of particular importance given the preferred embodiment of having the winding roll positioned below the floor level of the bulk container as herein explained. In one embodiment the hopper comprises protrusions at the outside, such as the pins shown in figure 6; in particular at a long side of the hopper; more in particular at a long side of the tundish.

To control the unloading-pressure, the hopper may further comprise closure means (26) to control the opening of the hopper into the rotary valve of the blower, such as for example a butterfly closure. This closure is preferably present at the base of the funnel. During unloading it may be necessary to change the opening to keep the unloading pressure in the blower at a more or less level value. Thus in a further embodiment the closure is variable controllable, this can be a manual or an automatic control. In case of the latter, at least one sensor will be present in the tundish to monitor the level of bulk material in the hopper during unloading.

One embodiment, which is not a part of the present invention, provides a hopper for use in unloading a bulk container with a pleated liner, said hopper comprising a tundish with side panels and a funnel with connection means for a detachable rotary valve, wherein tundish comprises a winding roll positioned below the floor level of the bulk container when connected thereto and wherein the funnel comprises variable controllable closure means (26).

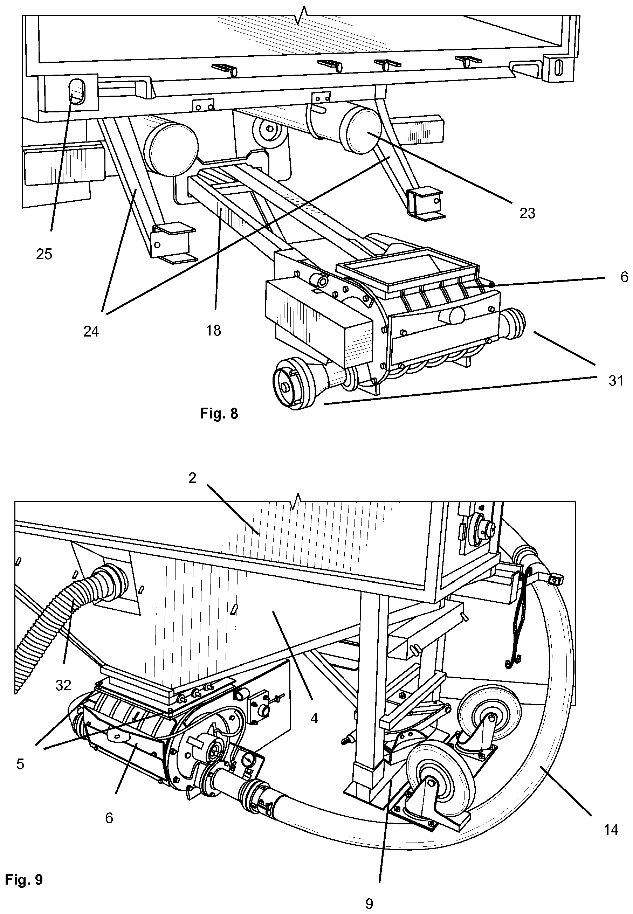

The hopper may further comprise a connection for a nene to prevent air pressure built up in the hopper; in particular this connection is present within the funnel of the hopper; more in particular close to the top of the funnel or just below the tundish. Both of these embodiments are shown in the accompanying figures 6 and 9 respectively.

Furthermore, the hopper may comprise one or more deployable legs.

The hopper is either positioned in a passive or an active configuration. The hopper is positioned in a passive configuration when the deployable side panels and/or deployable legs are positioned in a folded configuration or raised position, in particular when the legs are in a folded configuration or raised position. The hopper is positioned in an active configuration when the deployable side panels and/or deployable legs are positioned in an unfolded configuration. When in an active configuration, the hopper further comprises a winding roll, wherein said winding roll is positioned below the floor level of the bulk container when connected thereto. According to further embodiments of the present invention, even in passive configuration the hopper will further comprise one or more of the following features; a winding roll; a return line (32) connection; a variable controllable closure, or a level monitoring sensor. In a particular embodiment the hopper will comprise in passive configuration a tundish with side panels, and a funnel, wherein the tundisch comprises a winding roll, with optionally means to create an air current below the winding roll, and wherein the funnel comprises a return line (32) connection, and a variable controllable closure (26), optionally further comprising a level monitoring sensor (27).

In addition, in active configuration the hopper may be connected to the rotary valve, wherein said rotary valve can be connected to an air blower. In a particular embodiment, said air blower is present on the tractor unit of the trailer comprising the bulk cargo container. Furthermore, the hopper in active configuration may comprise a winding motor that is detachably connected to the winding roll. In a certain embodiment, the winding motor is a hydraulic motor and may be hydraulically connected to a trailer. In a particular embodiment, the hydraulic winding motor is integrated into the trailer, and even comprises a compartment to contain said winding motor during transport. In case of a hydraulic winding motor, the motor is preferably connected to the trailer with fixed hydraulic lines. Fixed hydraulic lines prevent oil spillage at the unloading site when compared to hydraulic couplings.

In another embodiment, the hopper further comprises a lid. Alternatively, the liner bag in the container has an extension of the rear curtain (29) that can be pulled out of the container and over the hopper to kind of enclose it within the liner bag of the container. To prevent bulk load from leaving the container upon opening of the bulkhead or doors, the carpet (21) has an extra fold at the rear of the container, that is raised and lies against the rear curtain (29) of the liner bag. To unload the extension of the rear curtain (29) of the liner bags is pulled out of the container to give access to the free end of the pleated liner (21). This free end is connected to the winding roll and the extension of the rear curtain (29) of the liner bag is pulled over and connected to the hopper. With the subsequent winding of the carpet (21) the extra raised fold of the carpet (21) at the rear of the container is pulled down, liberating the bulk material from the container into the hopper. With this particular configuration of liner bag and carpet (21) no further lid is needed, still enabling unloading in a closed environment. Tight clamping of the rear curtain (29) of the liner bag over the hopper even allows unloading under a nitrogen atmosphere. Thereto, in an embodiment of the present invention to hopper will comprise connection and/or clamping means (28), to hold the extension of the rear curtain (29) of the liner bag over and preferably connected; more in particular clamping means to clamp the extension of the rear curtain (29) of the liner bag to the hopper.

Thus in an embodiment the liner bag has an extended rear curtain (29) and the pleated liner an extra fold at the rear of the container, that is raised and lies against the rear curtain (29) of the liner bag.

An embodiment, which is not a part of the invention, also discloses a trailer comprising one more of the following elements and present to enable unloading of the container at the unloading site; a recess or docking space for the hopper, a recess or docking space for the rotary valve (6) underneath and at the back of the trailer, connection means such as a set of hoses (14) to connect the rotary valve (6) with an air blower, an integrated lift mechanism (18) underneath the trailer, a compartment to contain the winding motor during transport, a bumper bar (24) and an optional detachable support bar (13). When the hopper is in a passive configuration, the hopper may be stored in the hopper recess of the trailer, such recess is typically at the side with suspension means (30) such as hooks, bars or the like to allow suspension of the hopper underneath the trailer during transport. When the hopper is in an active configuration, the hopper may be attached to the trailer via an integrated lift mechanism. In a particular embodiment the integrated lift mechanism underneath the trailer comprises the rotary valve (6). In passive (transport) configuration as for example shown in Figure 7, the lift mechanism is raised and retracts the rotary valve (6) underneath and at the back of the trailer. The rotary valve (6) is connected to the free end of the lift mechanism and the lift mechanism positions the rotary valve (6) centrally with respect to the width of the trailer. In active (unloading) configuration the lift mechanism is extended and lowers the rotary valve (6) centrally behind the trailer. The hopper is connected with its funnel onto the rotary valve (6) and the combination raised by the lift mechanism and pulled against the back of the trailer.

### BRIEF DESCRIPTION OF THE DRAWINGS

With specific reference now to the figures, it is stressed that the particulars shown are by way of example and for purposes of illustrative discussion of the different embodiments of the present invention only.

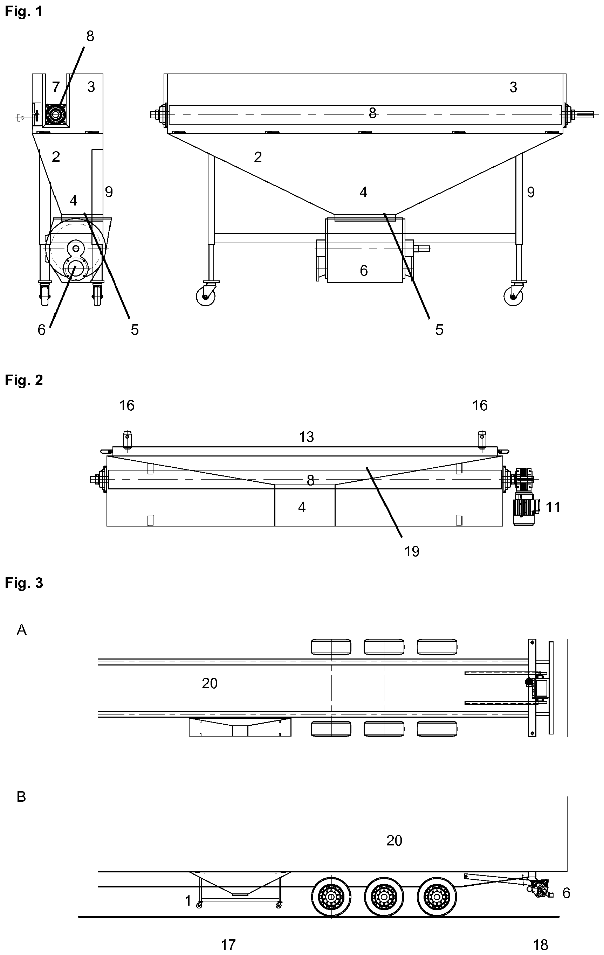

**Fig. 1****: Side-view (left) and front view (right) of the hopper (1).** In this particular embodiment, the hopper (1) comprises a tundish (2), deployed side panels (3) and legs (9), and a funnel (4) with connection means (5) for the rotary valve (6). The current hopper (1) comprises two recesses (7) in the left side panel and the right side panel, in which the winding roll (8) is installed. The current hopper comprises wheels as well, allowing easy transport when unfolding the hopper from a passive into an active configuration.
**Fig. 2****: Upper view of the hopper (1), when attached to a trailer.** The hopper (1) is supported and positioned by the support bar (13), which is attached to the trailer by one or more pins (16). Furthermore, a hydraulic winding motor (11) is attached to the winding roll (8), generating power for rotational movement and allowing the carpet of the liner (19) inside the container to be pulled out by the winding roll (8) and dropping the bulk cargo into the funnel (4).
**Fig. 3****: Bottom (A) & side view (B) of a trailer (20) comprising the hopper (1) of the current invention in a passive configuration.** In this particular embodiment, the hopper (1) is attached in a recess (17) underneath the trailer (20), and has deployed legs but no deployed side panels. Furthermore, the lift mechanism (18) with rotary valve (6) is present underneath the trailer.

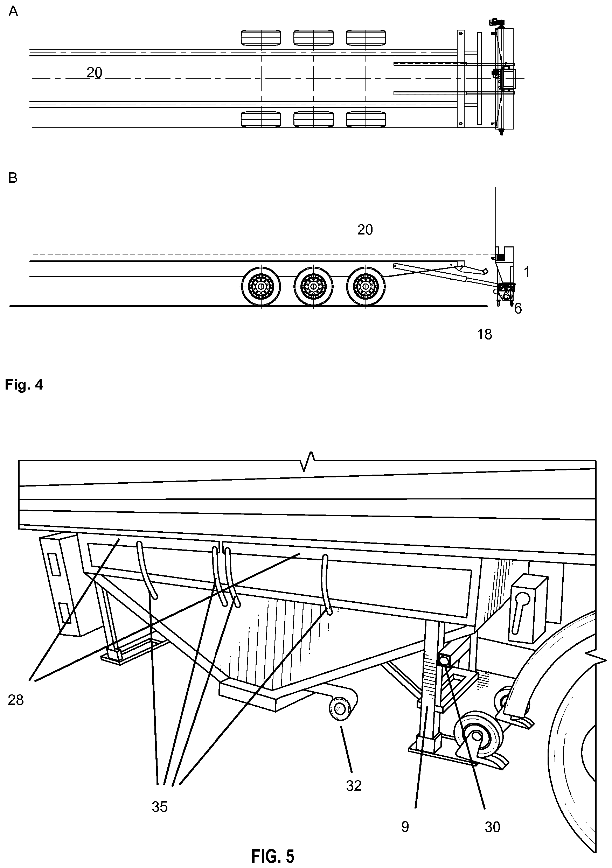

**Fig. 4****: Bottom (A) & side view (B) of a trailer (20) comprising the hopper (1) of the current invention in an active configuration.** In this particular embodiment, the hopper (1) attached to the rotary valve (6) is lifted by the lift mechanism (18) which extends beyond the trailer (20).
**Fig. 5****: Side view of a trailer (20) comprising the hopper (1) in passive configuration** . In this particular embodiment, the hopper (1) is suspended on a couple of bars attached to the trailer. It further shows the legs of the hopper in raised position with the wheels folded aside, and the return line (32) at the base of the funnel (4). Also visible are the clamping means (28), connected with elastics (35) to a set of hooks (not shown) at the side of the hopper, and used to cover the hopper with a cover sheet during transport and with an extension of the liner (29) during unloading of the bulk container.
**Fig. 6****: Side view of a trailer (20) comprising the hopper (1) in active configuration** . In this particular embodiment, one can see the lowered legs and wheels. It also shows the winding motor connected to the side of the tundish and the pressurized air lines (34) to create the airflow under the carpet in the tundisch. The bars (36) running down at the side are to control the opening of the closure at the base of the funnel.
**Fig. 7****: Perspective side view of the back of the trailer (20) comprising the rotary valve (6) in passive configuration.** In this particular embodiment, one can see how during transport the rotary valve (6) is fully retracted underneath the trailer. It is present at the end of a lift mechanism, centrally positioned between two arms holding the bumper bar, and has hose connections (31) at either side
**Fig. 8**: **Perspective top view of the back of the trailer (20) comprising the rotary valve (6) in active configuration.** In this particular embodiment, one can see how the lift mechanism extends and lowers the rotary valve (6) beneath the trailer. One can clearly see from this picture that during this active configuration the bumper bar is removed from the arms that hold the bumper bar during transport. Also visible are the corner locks (25) at the base corners of the container wherein the pins of the support bar or the tundish, in particular the pins from the tundish can fit to properly position the hopper behind the container.
**Fig. 9****: Perspective side view of the tundish mounted on the rotary valve (6) in active configuration.** In this particular embodiment, one can see how the tundish and rotary valve (6) are combined. The rotary valve (6) is connected with hoses to the valve with centrally at the top of the funnel the return line (32). It also shows in this active configuration the legs and wheels are retracted and accordingly out of the way for the connection and passage of the hoses. This is clearly a further advantage of the retractable legs and wheels of the hopper according to the invention.
**Fig. 10****: Detailed view inside the tundish,** showing the air pressure line at the side of the container with nipple directed towards the peripheral ends of the winding roll.

### DETAILED DESCRIPTION OF THE INVENTION

The present invention describes an unloading system according to claim 1. In a certain embodiment, the tundish (2) may have a rectangular or square shape, but circular, round and other shapes may be possible as well. The tundish (2) is made of durable materials, for instance stainless steel, just like the other components mentioned in this description, but some components can be made of other materials such as aluminium. In a certain embodiment, it covers the full length of the back of the trailer, i.e. it covers the full width of the bulk container. Furthermore, in one embodiment the tundish (2) comprises deployable side panels (3) for enlargement of the tundish (2), which may be clicked or folded onto the tundish (2), although other mechanisms are possible as well. Within the context of the invention, the tundish represents the space in the hopper above the funnel (4). The funnel (4) enables easy channeling of the cargo when attached to rotary valve (6) by the connection means (5) and avoids spillage of the cargo. The connection means may be screws, a clicking system or other mechanisms according to the choice of the skilled person. For unloading the hopper will comprise a winding roll. This winding roll could be permanently fixed in the tundish or could be replaceable. Another feature of the deployable side panels (3) is that they may comprise recesses (7) to receive said winding roll (8).

A problem observed with the unloading principle of a bulk container with a liner bag and carpet, is the irregularity with respect to the amount of material unloaded per time interval. Load in the container is not always even, and the carpet is pulled per folded section. As a consequence, the unload pressure for the blower is constantly changing creating high pressure differences in the tundish. To address this problem two features are added to the tundish. It now comprises an adjustable closure such as a butterfly closure to regulate the quantity leaving the tundish and entering the rotary valve (6) / blower. This adjustable closure is preferably present at the base of the funnel. This further requires that the tundish acts as a buffer, always comprising a minimal amount of material determined using at least one level sensor present along the central axis line of the funnel of the tundish. Preferably two level sensors will be present allowing the measure the emptying speed and to adjust the velocity of the roll in maintaining the amount of material in the tundish between certain level. Thus in one embodiment the hopper will comprises an adjustable closure, preferably at the base of the funnel and at least one level sensor present along the central axis line of the funnel of the tundish.

Based on the level sensor, there could either be;
- a controller to adjust the opening and closure of the adjustable closure;
- a controller to adjust the speed of the winding roll;
- or the combination thereof.

Hence in one embodiment the unloading system according to the invention would comprises either or both of said controllers.

The bulk cargo is contained within a liner bag or liner (19) comprising a carpet, thereby covering the entire cargo content of the container. Carpets & liners (19) may be made from any suitable material, although preferably the liners have a high resistance to stretching at least along the lengths of the liners. For example, the carpets & liners (19) may be constructed of polyethylene and polypropylene fabric. Alternatively, the carpets & liners (19) may be made from strips, such as two inch strips, of fiberglass tape, metal reinforced tape, or polyester reinforced tape, or the carpets & liners could be made from coextruded cross-laminated plastic film, or coextruded, or cross laminated film. As still additional examples, the carpets & liners (19) may be made from natural materials such as cotton. Furthermore, the liner (19) may be elongated, having a rectangular shape, including front and back edges. The liner (19) may have folded sections spaced apart along the length of the liner as well, such as for example an extended section at the rear of the container. As already mentioned herein before, such extended section, also referred to as rear curtain (29) can be pulled over the hopper when in unloading position, enabling unloading in a closed environment. To unload the doors of the container or the bulkhead is opened. To prevent undesired discharge crossbars will be present at the back, cooperating with folds in the liner and carpet. At the inside and lying against the rear end of the liner, the carpet has a raised fold with the free end accessible at the base of the liner. Part of the liner (19) is then attached to the winding roll (8), thereby slowly furling the liner carpet onto the winding roll and slowly pulling out the cargo. In a certain embodiment, the liner carpet is pulled out at a rate between 0-100cm/min, more particular between 0-50cm/min, even more particular between 25-50cm/min. Attachment means (15) may be applied to the winding roll (8) to hold the liner material onto the winding roll. For instance, one or more pins may be attached to the roll (8) to prevent the liner material thereof from prematurely tearing or getting detached.

In that case, preferably, a multitude of such pins are inserted into each roll at a multitude of locations uniformly spaced along the length of the winding roll (8). Alternatively, adhesive tape or (temporary) glue may applied over the roll (8) to prevent the liner carpet material from prematurely tearing or getting detached. It has been observed that proper, straight alignment of the carpet on the winding roll is important to prevent the former from breaking or tearing apart. Hence, in a preferred embodiment the winding roll will comprise marker elements such as a line along its axis. In one embodiment longitudinal marker lines are present on every quadrant of the roll.

Another problem observed with the unloading principle of a bulk container with a liner bag and carpet, is that during unloading some of the bulk material has the tendency to get stuck between the winding carpet. This creates unevenness in the winded carpet which results in tension on the pulled carpet and causes ruptures and even breaks. A first feature to address this problem consists of lowering the winding roll in the tundish. The winding roll is not at the same level as the floor of the container but positioned lower in the tundish. Being positioned lower gravity assists in clearing the moving carpet. Surprisingly, this lowering of the tundish didn't fully resolve the problem. Even with a lowered roll, there was still built-up of bulk material in the winded carpet at the peripheral ends of the roll. A further element contributing to the clearing of the carpet is the creation of an airflow underneath the carpet and directed towards the roll, in particular directed to the edges of where the carpet is being coiled onto the roll. Again, without such airflow material has the tendency to stick on the carpet at these edges and gets trapped between the carpet. Piling up will make the carpet to split and brake. Thus in an embodiment of the invention the hopper is characterized in that the winding roll is positioned below the floor level of the container and in that it comprises elements such as vents to create an airflow underneath the carpet and directed towards the roll.

A further element related to the irregularity in the amount of unloaded material is that there is a risk of back pressure being built up into the tundish. To avoid this a return line (32) could be added to the hopper. In a first embodiment such return line (32) was positioned at the base of the funnel, such as shown in Figure 6. Where said position actually prevents the pressure built-up it was observed that a lot of the bulk material got lost through said return line (32). Surprisingly when moved through the hopper with an exit at the upper central part of the tundish hardly any material is lost but still properly prevents the undesired pressure effects. Such an embodiment is for example shown in Figure 9. In one embodiment the hopper will comprise a return line (32), in particular with an exit at the upper part, more in particular at the upper central part of the tundish. With the return line going through the hopper, the whole installation gets more compact which is a benefit in requiring less space underneath the trailer to suspend the hopper during transport.

Furthermore, the hopper (1) may comprise one or more (in a preferred embodiment four) deployable legs (9). Both the deployable legs (9) and when present side panels (3) allow easy transformation of the hopper (1) into a passive or an active configuration.

The hopper (1) is positioned in a passive configuration when the deployable side panels (3) and/or deployable legs (9) are positioned in a folded configuration. In that way, the hopper (1) may be easily stored in a recess (17) beneath the trailer (20), thereby taking just a small amount of space. This recess is typically at the side of the trailer and comprises hooks or the like to allow suspension of the hopper underneath the trailer during transport.

The hopper (1) is positioned in an active configuration when the deployable side panels (3) and/or deployable legs (9) are positioned in an unfolded configuration. When in an active configuration, the hopper (1) further comprises a winding roll (8) with a function as described above. In addition, in active configuration the hopper (1) may be connected to the rotary valve (6), wherein said rotary valve is connected to an air blower (10) to evacuate the cargo from the unloading site. The air blower is preferably present on the tractor unit of the trailer (20) comprising the bulk cargo container.

Furthermore, the hopper (1) in active configuration may comprise a winding motor (11) that is detachably connected to the winding roll (8) and provides power for the winding roll (8). In a certain embodiment, the winding motor (11) is a hydraulic motor and may be hydraulically connected to a trailer (20). In a particular embodiment, the hydraulic winding motor (11) is integrated into the trailer (20), and even comprises a compartment to contain said winding motor during transport. In case of a hydraulic winding motor, the motor is preferably connected to the trailer with fixed hydraulic lines. Fixed hydraulic lines prevent oil spillage at the unloading site when compared to hydraulic couplings. As evident from the foregoing and in order to control the amount of material entering the hopper, the roll needs to work in a large velocity range from very slow 0,25 rpm to very fast 100 rpm. Such high range in velocity can best be achieved with a hydraulic motor. Hence in a preferred embodiment the winding motor is a hydraulic winding motor. Other power sources, such as an electric battery or an electric generator may be possible as well. Any suitable motor or engine may be used in the practice of the present invention. In a particular embodiment the power source is integrated into the trailer (20).

In another embodiment, the hopper further comprises a lid (12). Certain goods require unloading in a closed environment, for example under a nitrogen atmosphere. The lid (12) enables the goods and cargo to be unloaded in such a closed environment. In an alternative embodiment and as already detailed herein above, the hopper could equally be closed by means of the liner. At the open end of the container the liner has an extra flap which can be unfolded and pulled over the tundish when in position. It is closed using U-shaped (28) clamping means that fit over the edges of the tundisch and which are kept in postion with elastics (35), such as for example shown in Figure 5. This simplified the design of the tundisch, no foldable side panels and lid are needed anymore. The plastic liner also doesn't obscure the view in the Tundish, beneficial in monitoring the unloading procedure.

The unloading system also comprises a trailer comprising a recess (17), connection means (5) to connect the detachable rotary valve (6) with an air blower, an integrated lift mechanism (18) and a detachable support bar (13).

When the hopper (1) is in a passive configuration, the hopper is stored in the recess (17) of the trailer (20).

When the hopper (1) is in an active configuration, the hopper may be attached to the trailer (20) via an integrated lift mechanism (18).

For the loading of the cargo into the container, the process is similar as other known processes using a liner (19). The driver takes a sealed bag that contains the actual liner and lines the container as usual. The carpet is pre-folded in the liner and the driver does not need to perform additional tasks. He only should take extra care when taking the liner from its bag and positioning it in the container.

The unloading of the cargo clearly differs from other known processes, as the unloading may be characterized by the following steps:
- First, the complete vehicle is parked near the unloading silo (< 6mtr) and the blower (10) is connected to the chassis with a hose (14). Next, the rear underrun bumper bar (22) is moved to a non-obstructive position. Subsequently, the support bar (13) is attached to the rear of the container by pins (16) and the doors of the container is opened. The support bar (13) will assure support, proper positioning and fixation of the hopper (1) onto the trailer (20). In an alternative embodiment such as for example shown in Figure 6, the pins (16) for proper positioning and fixation of the hopper onto the trailer are directly present on the tundish.
- In a following step, the hopper (1) is unfolded from the passive into the active configuration. The one or more, but preferably four legs (9) are mounted onto or lowered off the tundish (2) and the hopper (1) is disconnected from underneath the trailer (20). Legs (9) may comprise wheels, which enables easy transport of the hopper (1) towards the back of the trailer.
- Next, the rotary valve (6) is hydraulically slid out from beneath the trailer by means of the integrated lift mechansim and further lowered to the ground. The funnel (4) is connected to the rotary valve (6) by the connection means (5). The hopper (1) with attached rotary valve (6) is hydraulically lifted by the integrated lift mechanism (18) and pulled against the support bar (13). In a certain embodiment, the lift mechanism (18) comprises one or more lifting cylinders which are mounted on a slide together with the rotary valve (6). One or more additional lifting cylinders aid in lifting the hopper (1). Furthermore, and in case the winding roll is not permanently fixed in the tundish, side panels (3) are erected onto the tundish (2) and a winding roll (8) is placed between the recesses (7) of the side panels (3).
- Further, the hydraulic winding motor (11) is positioned on the winding roll. The outer layer of the liner (19) is cut over the full width or the extra extension is cut free , making the folded carpet (21) accessible. The excess length of the carpet is pulled out and in a next step, attached to the winding roll (8).
- the tundish (2) may be closed by means of a lid (12) or the extended rear end of the liner.
- In a following step, an air hose (14) is connected between the air blower (10) and the rotary valve (6). Multiple air hoses may be present. In a certain embodiment, the rotary valve (6) may be connected with one or more permanent hoses (23) present on the trailer, such as shown in Figures 7 and 8.
- An air stream is generated underneath the carpet in the direction of the roll.
- Next, the carpet of the liner (19) is pulled out of the trailer (20) with the hydraulic winding drive motor (11), thereby allowing the cargo to gently fall into the tundish (2) of the hopper (1). Unloading starts when the winding roll (8) turns. The speed of the liner may be automatically governed by sensors controlled by the amount cargo in the hopper.
- The hopper is discharged by opening the variable closure and the rotary valve (6); and
- Optionally, cargo may be transported further via the air blower (10) connected to the rotary valve (6).

After unloading, the drive unit (11) of the winding roll (8) is removed and stored in a case on the side of the chassis. The tundish (2) may be opened and the winding roll (8) with carpet may be removed and stored on the side. Next, the hopper (1) with the rotary valve (6) are lowered to the floor and cleaned with pressurized air together with the product discharge hose. In a following step, the air hose (14) is disconnected and stored. The hopper (1) is then transformed from an active into a passive configuration and again stored underneath the chassis. Next, the rotary valve (6) is retracted and put back in the transport position as shown in Figure 7, the support bar (13) is removed and the rear underrun bumper bar (22) is slid back in position. Finally, the liner (19) is removed and the doors of the container are closed again.

Exemplary embodiments of the hopper and trailer are provided in figures 5 to 10. Per reference to Figure 5, during transport the hopper is suspended at the side and underneath the trailer. Thereto the chassis of the trailer has suspension means like hooks or bars whereon the hopper can be suspended. In order to enable suspension of the hopper under the trailer the latter has height adjustable and retractable legs with wheels. In the embodiment shown in Figure 5, the hopper has a couple of sleeves at the side that can accommodate the bars that are attached to the chassis of the trailer. With the legs and wheels down, the hopper can be driven in front of said bars, if still needed the height of the legs can be adjusted such that the sleeves are positioned before the bars and the hopper can be moved backward with the bars entering the sleeves. In said position the legs and wheels can be raised and the hopper will be suspended at the side and underneath the trailer. Any known height adjustable mechanism is suitable for the height adjustment of the legs, in figure 5 it is for example based on a jackscrew at both sides, but could equally be based on a hydraulic jack mechanism. With the inverse operation, the hopper can be freed from the trailer into a free standing position as shown in Figure 6 and rolled towards the unloading position behind the trailer.

There it will work together with the rotary valve (6) which is positioned on a lift mechanism at the back and underneath the trailer. In transport or passive position as shown in Figure 7, the lift is lifted and retracted, pulling the rotary valve (6) underneath and behind the bumper arms (24) holding the removable bumper bar (22). Adjacent to these arms, permanent air hoses (23) are running underneath the trailer towards the Air Blower (10). Per reference to Figure 8, for unloading the lift mechanism is lowered and extended to place the rotary valve (6) at a lowered position behind the trailer. This movement requires removal of the bumper bar (22) as can be seen in Figure 8. In this position the hopper can be rolled above the rotary valve (6). By retracting the legs of the hopper, the later is being placed on top of the rotary valve (6) and connected therewith through the connection means (5) at the base of the funnel (4). In the shown embodiment with a number of screws and bolts. Once firmly connected the combination of rotary valve (6) and hopper is raised and retracted by the lift mechanism, causing the tundish to be pulled against the back of the container. As explained, pins at the side of the tundish will fit in the base corner locks of the container and properly position the combination of rotary valve (6) and hopper behind the container for the unloading operation. Having the possibility of retracting the legs and wheels of the hopper has the benefit that it creates an easy access to the rotary valve (6), and more in particular to the hose connections (31) for connecting it with the blower by the air hoses (14).

This set of figures nicely show how the main components of the unloading system according to the invention, namely;
- the hopper with it specific characteristics like the retractable legs and wheels, its means to create an air current besides and in the direction of the winding roll (in particular towards the peripheral ends of the winding roll), and its 'positioning' pins (16) at the long sides of the tundish; and
- the rotary valve (6) suspended on a lift mechanism underneath the trailer (in particular centrally and at the back of the trailer.

The figures show eventual further characteristics of the hopper like the bars to allow suspension underneath the trailer; the return line (32); the lowered positioning of the winding roll in the tundish; the controllable closure at the base of the funnel; clamping means (28).

As all of the required equipment (including winding motor, rotary valve, air blower...) is present on the trailer chassis and/or tractor unit when the container is transported, the current invention allows to unload tons of bulk cargo within two hours, thereby leaving behind a minimum amount of bulk cargo (less than 25 kg) and not being strictly dependent of a hopper on the cargo unloading site.

In addition, both the costs per load of the expendable material, the weight of the unloading system and the additional weight of the expendable material are limited. Furthermore, the system is suitable for all multifunctional (bulk & pallets) containers and the system works flawlessly at every relative humidity and at- 30°C to 50°C.

### List of depicted parts

1) Hopper
2) Tundish
3) Side panels
4) Funnel
5) Connection means
6) Rotary valve
7) Recess side panels
8) Winding roll
9) Deployable legs
10) Air blower
11) Winding motor
12) Lid
13) Support bar
14) Air hose or Hose
15) Attachment means on winding roll
16) Pins on support bar
17) Recess trailer
18) Lift mechanism
19) Liner or Liner Bag
20) Trailer
21) Pleated Liner or Carpet
22) Bumper Bar
23) Permanent Hose
24) Bumper Arms
25) Corner locks
26) Controllable Closure or Variable controllable closure
27) Level monitoring sensor or Level Sensor
28) Clamping Means
29) Rear Curtain or Extension of the liner
30) Suspenion Means
31) Hose Connections
32) Return line
33) Means to create an air flow
34) Air Lines
35) Elastics
36) Control bars

## Claims

1. An unloading system for unloading a bulk container with a liner bag (19) and carpet (21), comprising a hopper (1) and a trailer (20), wherein:
- the hopper (1) comprising a winding roll (8), a tundish (2) and a funnel (4), wherein the tundish (2) comprises side panels (3) and that the funnel (4) comprises connection means (5) for a detachable rotary valve (6), wherein the hopper is either positioned in a passive configuration or in an active configuration;
- the trailer (20) comprises a hopper recess (17) to store said hopper when in said passive configuration, an optional detachable support (13), a detachable bumper bar (22), connection means to connect the detachable rotary valve (6) with an air blower and an integrated lift mechanism (18) to pull the hopper with connected rotary valve (6) against the back of the container;
- wherein the rotary valve (6) is attached to the trailer (20) via the integrated lift mechanism (18).

2. The unloading system according to claim 1, wherein the hopper (1) comprises one or more foldable and unfoldable side panels (3) comprise recesses (7) to receive said winding roll (8).

3. The unloading system according to claim 1 or 2, further **characterized in that** the hopper (1) comprises one or more deployable legs (9), that can be raised when the hopper is suspended underneath the trailer during transport and that can be lowered when the hopper needs to be displaced during unloading operations.

4. The unloading system according to claims 2 or 3, wherein in said passive configuration the deployable side panels (3) and/or deployable legs (9) are positioned in a folded configuration.

5. The unloading system according to claims 2 or 3, wherein in said active configuration the deployable side panels (3) and/or deployable legs (9) are positioned in an unfolded configuration.

6. The unloading system according to claim 1, wherein the winding roll (8) is a fixed winding roll (8).

7. The unloading system according to claim 6, wherein the hopper (1) comprises a winding motor (11) that is detachably connected to the winding roll (8).

8. The unloading system according to claim 7, wherein the winding motor (11) is a hydraulic motor.

9. The unloading system according to claim 8, wherein the hydraulic winding motor (11) is hydraulically connected to the trailer (20).

10. The unloading system according to claim 9, wherein the hydraulic winding motor (11) is integrated into the trailer (20).

11. The unloading system according to any one of claims 5 to 10, wherein the hopper (1) further comprises a lid (12).

12. Use of the unloading system as defined in any one of claims 1 to 11.

13. A method for unloading bulk cargo that is stored in a liner bag (19) with carpet (21) out of a container using the unloading system as defined in any of the claims 2 to 11, the method comprising the following steps:
- the hopper (1) is unfolded from the passive configuration on the trailer (20) into the active configuration:
- the rotary valve (6) is lowered by the integrated lift mechanism (18) from the passive (transport) configuration
- the funnel (4) of the hopper is connected to the rotary valve;
- the hopper with attached rotary valve is lifted by the integrated lift mechanism and pulled against the rear of the container;
- the carpet (21) of the liner bag is connected to the winding roll (8), a which is driven by a winding motor (11);
- the rotary valve is optionally connected to an air blower (10);
- cargo is pulled out of the trailer by rotational movement of the winding roll, into the hopper;
- the hopper is discharged by opening the rotary valve; and
- optionally transported further by means of the air blower connected to the rotary valve.

14. The method according to claim 13, wherein the method further comprises one or more of the following steps;
- the hopper (1) is closed with a lid (12) prior to roll up of the carpet (21);
- the hopper is closed by a rear curtain (29) of the liner bag (19) prior to roll up of the carpet
- creating in the tundish (2) at the side facing the container, an air current below the carpel and directed towards the winding roll (8);
- controlling discharge of the hopper into the rotary valve (6) by variable closure means
- connecting the hopper to a return line (32).

## Patentansprüche

1. Entladesystem zum Entladen eines Schüttgutbehälters mit einem Auskleidungssack (19) und Teppich (21), umfassend einen Trichter (1) und einen Anhänger (20), wobei:
- der Trichter (1) eine Wickelrolle (8), einen Stahlverteiler (2) und einen Fülltrichter (4) umfasst, wobei der Stahlverteiler (2) Seitenwände (3) umfasst und der Fülltrichter (4) Anschlussmittel (5) für ein abnehmbares Drehventil (6) umfasst, wobei der Trichter entweder in einer passiven Konfiguration oder in einer aktiven Konfiguration positioniert ist;
- der Anhänger (20) eine Trichteraussparung (17) enthält, um den Trichter zu lagern, wenn er sich in der passiven Konfiguration befindet, eine optionale abnehmbare Stütze (13), eine abnehmbare Stoßstange (22), Verbindungsmittel, um das abnehmbare Drehventil (6) mit einem Luftgebläse zu verbinden, und einen integrierten Hebemechanismus (18), um den Trichter mit dem angeschlossenen Drehventil (6) gegen die Rückseite des Behälters zu ziehen;
- wobei das Drehventil (6) über den integrierten Hebemechanismus (18) am Anhänger (20) befestigt ist.

2. Entladesystem nach Anspruch 1, wobei der Trichter (1) eine oder mehrere klappbare und aufklappbare Seitenwände (3) umfasst, die Aussparungen (7) zur Aufnahme der Wickelrolle (8) aufweisen.

3. Entladesystem nach Anspruch 1 oder 2, **dadurch gekennzeichnet, dass** der Trichter (1) ein oder mehrere ausfahrbare Beine (9) umfasst, die angehoben werden können, wenn der Trichter während des Transports unter dem Anhänger aufgehängt ist, und die abgesenkt werden können, wenn der Trichter während der Entladevorgänge verschoben werden muss.

4. Entladesystem nach Anspruch 2 oder 3, wobei in der passiven Konfiguration die entfaltbaren Seitenwände (3) und/oder die entfaltbaren Beine (9) in einer gefalteten Konfiguration positioniert sind.

5. Entladesystem nach Anspruch 2 oder 3, wobei in der aktiven Konfiguration die entfaltbaren Seitenwände (3) und/oder die entfaltbaren Beine (9) in einer ausgeklappten Konfiguration positioniert sind.

6. Entladesystem nach Anspruch 1, wobei die Wickelrolle (8) eine feste Wickelrolle (8) ist.

7. Entladesystem nach Anspruch 6, wobei der Trichter (1) einen Wickelmotor (11) umfasst, der abnehmbar mit der Wickelrolle (8) verbunden ist.

8. Entladesystem nach Anspruch 7, wobei der Wickelmotor (11) ein Hydraulikmotor ist.

9. Entladesystem nach Anspruch 8, wobei der hydraulische Wickelmotor (11) hydraulisch mit dem Anhänger (20) verbunden ist.

10. Entladesystem nach Anspruch 9, wobei der hydraulische Wickelmotor (11) in den Anhänger (20) integriert ist.

11. Entladesystem nach einem der Ansprüche 5 bis 10, wobei der Trichter (1) ferner einen Deckel (12) umfasst.

12. Verwendung des Entladesystems wie in einem der Ansprüche 1 bis 11 definiert.

13. Verfahren zum Entladen von Schüttgut, das in einem Auskleidungssack (19) mit Teppich (21) gelagert ist, aus einem Behälter unter Verwendung des in einem der Ansprüche 2 bis 11 definierten Entladesystems, das Verfahren, umfassend die folgenden Schritte:
- der Trichter (1) wird aus der passiven Konfiguration auf dem Anhänger (20) in die aktive Konfiguration aufgeklappt:
- das Drehventil (6) wird durch den integrierten Hebemechanismus (18) aus der passiven (Transport-) Konfiguration abgesenkt
- der Fülltrichter (4) des Trichters ist mit dem Drehventil verbunden;
- der Trichter mit angeschlossenem Drehventil wird durch den integrierten Hebemechanismus angehoben und gegen die Rückseite des Behälters gezogen;
- der Teppich (21) des Auskleidungssacks ist mit der Wickelrolle (8) verbunden, die von einem Wickelmotor (11) angetrieben wird;
- das Drehventil ist optional an ein Luftgebläse (10) angeschlossen;
- die Ladung wird durch eine Drehbewegung der Wickelrolle aus dem Anhänger in den Trichter gezogen;
- der Trichter wird durch Öffnen des Drehventils entleert; und
- optional mit Hilfe des an das Drehventil angeschlossenen Luftgebläses weiter transportiert.

14. Verfahren nach Anspruch 13, wobei das Verfahren ferner einen oder mehrere der folgenden Schritte umfasst;
- der Trichter (1) wird vor dem Aufrollen des Teppichs (21) mit einem Deckel (12) verschlossen;
- der Trichter wird vor dem Aufrollen des Teppichs durch einen hinteren Vorhang (29) des Auskleidungssacks (19) verschlossen:
- Erzeugen im Stahlverteiler (2) an der dem Behälter zugewandten Seite einen Luftstrom unterhalb des Teppichs, der auf die Wickelrolle (8) gerichtet ist;
- Steuern der Entleerung des Trichters in das Drehventil (6) durch variable Verschlussmittel:
- Verbinden des Trichters mit einer Rücklaufleitung (32).

## Revendications

1. Système de déchargement permettant de décharger un conteneur pour vrac avec un sac-doublage (19) et un tapis (21), comprenant une trémie (1) et une remorque (20), dans lequel :
- la trémie (1) comprenant un rouleau d'enroulement (8), un panier de coulée (2) et un entonnoir (4), dans lequel le panier de coulée (2) comprend des panneaux latéraux (3) et l'entonnoir (4) comprend un moyen de liaison (5) pour une vanne rotative amovible (6), dans lequel la trémie est positionnée soit dans une configuration passive, soit dans une configuration active ;
- la remorque (20) comprend un évidement de trémie (17) pour stocker ladite trémie lorsqu'elle est en configuration passive, un support amovible facultatif (13), une lame de pare-chocs amovible (22), un moyen de liaison pour relier la vanne rotative amovible (6) à une souffleuse d'air et un mécanisme de levage intégré (18) pour tirer la trémie avec la vanne rotative reliée (6) contre l'arrière du conteneur ;
- dans lequel la vanne rotative (6) est fixée à la remorque (20) par l'intermédiaire du mécanisme de levage intégré (18).

2. Système de déchargement selon la revendication 1, dans lequel la trémie (1) comprend un ou plusieurs panneaux latéraux pliables et dépliables (3) comprenant des évidements (7) pour recevoir ledit rouleau d'enroulement (8).

3. Système de déchargement selon la revendication 1 ou 2, en outre **caractérisé en ce que** la trémie (1) comprend un ou plusieurs pieds déployables (9), qui peuvent être soulevés lorsque la trémie est suspendue sous la remorque pendant le transport et qui peuvent être abaissés lorsque la trémie doit être déplacée pendant les opérations de déchargement.

4. Système de déchargement selon les revendications 2 ou 3, dans lequel, dans ladite configuration passive, les panneaux latéraux déployables (3) et/ou les pieds déployables (9) sont positionnés dans une configuration pliée.

5. Système de déchargement selon les revendications 2 ou 3, dans lequel, dans ladite configuration active, les panneaux latéraux déployables (3) et/ou les pieds déployables (9) sont positionnés dans une configuration dépliée.

6. Système de déchargement selon la revendication 1, dans lequel le rouleau d'enroulement (8) est un rouleau d'enroulement fixe (8).

7. Système de déchargement selon la revendication 6, dans lequel la trémie (1) comprend un moteur d'enroulement (11) qui est relié de manière amovible au rouleau d'enroulement (8).

8. Système de déchargement selon la revendication 7, dans lequel le moteur d'enroulement (11) est un moteur hydraulique.

9. Système de déchargement selon la revendication 8, dans lequel le moteur d'enroulement (11) hydraulique est relié hydrauliquement à la remorque (20).

10. Système de déchargement selon la revendication 9, dans lequel le moteur hydraulique d'enroulement (11) est intégré à la remorque (20).

11. Système de déchargement selon l'une des revendications 5 à 10, dans lequel la trémie (1) comprend en outre un couvercle (12).

12. Utilisation du système de déchargement tel que défini dans l'une quelconque des revendications 1 à 11.

13. Procédé de déchargement d'une cargaison en vrac stockée dans un sac-doublage (19) avec tapis (21) hors d'un conteneur à l'aide du système de déchargement défini dans l'une quelconque des revendications 2 à 11, le procédé comprenant les étapes suivantes :
- la trémie (1) est dépliée de la configuration passive sur la remorque (20) à la configuration active :
- la vanne rotative (6) est abaissée par le mécanisme de levage intégré (18) de la configuration passive (transport)
- l'entonnoir (4) de la trémie est relié à la vanne rotative ;
- la trémie avec la vanne rotative attachée est levée par le mécanisme de levage intégré et tirée contre l'arrière du conteneur ;
- le tapis (21) du sac-doublage est relié au rouleau d'enroulement (8), qui est entraîné par un moteur d'enroulement (11) ;
- la vanne rotative est éventuellement reliée à une souffleuse d'air (10) ;
- la cargaison est extraite de la remorque par le mouvement de rotation du rouleau d'enroulement, et introduite dans la trémie ;
- la trémie est évacuée par l'ouverture de la vanne rotative ; et
- éventuellement transportée plus loin au moyen de la souffleuse d'air reliée à la vanne rotative.

14. Procédé selon la revendication 13, dans lequel le procédé comprend en outre une ou plusieurs des étapes suivantes ;
- la trémie (1) est fermée par un couvercle (12) avant l'enroulement du tapis (21) ;
- la trémie est fermée par un rideau arrière (29) du sac-doublage (19) avant l'enroulement du tapis :
- la création dans le panier de coulée (2), du côté du conteneur, d'un courant d'air sous le tapis et dirigé vers le rouleau d'enroulement (8) ;
- la commande d'évacuation de la trémie dans la vanne rotative (6) par un moyen de fermeture variable :
- la liaison de la trémie à une conduite de retour (32).
